# EUROPEAN PATENT APPLICATION

(11) **EP 1 555 304 A1**
(43) Date of publication of application: **20.07.2005**
(21) Application number: 03809456.1
(22) Date of filing: 24.10.2003
(51) Int. Cl.: C09K 3/00, C08L 23/08, C09J 7/02

(54) **RELEASE AGENT AND RELEASE SHEET**

(30) Priority: 25.10.2002 JP 2002311367
(71) Applicant: Mitsubishi Chemical Corporation, Tokyo 108-0014 (JP)
(72) Inventor: YAMAMOTO, Satoru, Yokkaichi-shi, Mie 510-8530 (JP); NISHIZAWA, Osamu, Yokkaichi-shi, Mie 510-8530 (JP); NOZAWA, Koutarou, Yokkaichi-shi, Mie 510-8530 (JP); AKASHIGE, Etsushi c/o Center for Analytical, Yokkaichi-shi, Mie 510-8530 (JP); SEKI, Motohiro, Yokkaichi-shi, Mie 510-8530 (JP); KUNITAKE, Maki, Yokkaichi-shi, Mie 510-8530 (JP)
(74) Representative: Woods, Geoffrey Corlett
(86) International application number: PCT/JP2003/013620
(87) International publication number: WO 2004/037942

(57) **Abstract**

A release agent comprising (A) an olefin-based elastomer having a density of not less than 0.855 g/cc and less than 0.868 g/cc, and (B) an ethylene-α-olefin copolymer having a density of from 0.868 g/cc to 0.970 g/cc as main components, wherein the difference in average density between the components (A) and (B) is not less than 0.005 g/cc and the mixing weight ratio of the component (A) to the component (B) is from 90:10 to 10:90. Such a release agent contains no silicone-based components generating undesired gasses, can exhibit not only a good releasability to various adhesives but also a less fluctuation in peeling force, and can maintain a low peeling force even when the release agent is bonded to an adhesive and preserved under a heating condition.

## Description

### TECHNICAL FIELD

The present invention relates to a release agent and a release sheet. Meanwhile, in the present invention, the wording "sheet" used in the release sheet is also intended to conceptually involve a film.

### BACKGROUND ART

Release films include a substrate and a release layer formed on at least one surface of the substrate, and have been extensively used for protecting an adhesive surface or a bonding surface. Release agents used for forming the release layer are generally classified into silicone-based release agents and non-silicone-based release agents.

The silicone-based release agents are excellent in releasability, but cause problems such as failure (corrosion, contact troubles, etc.) due to a trace amount of siloxane-based gases generated therefrom especially in the application fields such as electronic equipments and electric equipments.

As the non-silicone-based release agents, there have been proposed release agents which are lessened in surface energy by using halogen compounds such as fluorides therein, release agents composed of polyvinyl carbamate (reaction product of PVA and C₁₈H₃₇NCO) as a long chain alkyl-containing polymer, release agents composed of a reaction product of polyethylene imine and C₁₈H₃₇NCO, release agents composed of a copolymer containing perfluoroalkylvinyl as a main component, release agents composed of a polyethylene-based resin composition, etc.

The non-silicone-based release agents are free from generation of the siloxane-based gases, require no use of combination of special catalysts nor operations such as heat treatments, attain a good releasability only by drying after its application, and have advantages such as long pot life. However, in general, the non-silicone-based release agents need a larger peeling force and tend to be deteriorated in heat resistance as compared to that of the silicone-based release agents, thereby causing problems such as increase in peeling force when the release agents are bonded to an adhesive and preserved under a heating condition. Further, the non-silicone-based release agents have the following peculiar problems depending upon materials used therefor.

For example, the release agents which are lessened in surface energy by using halogen compounds such as fluorides therein, cannot meet a current demand of dehalogenation for decreasing environmental burden upon disposal of wastes. The release agents composed of a copolymer containing perfluoroalkylvinyl as a main component exhibit an excellent releasability, but are usually insoluble in organic solvents and dissolved only in specific and expensive solvents such as FR thinners, resulting in considerably limited applications.

Also, as the release agents composed of a polyethylene-based resin composition, there are known release agents containing a low-density polyethylene-based resin as a main component (for example, refer to Japanese Patent Publication (KOKOKU) No. 51-20205(1976) and Japanese Patent Application Laid-Open (KOHYO) 11-508958(1999)), and release agents containing a high-density polyethylene-based resin as a main component (for example, refer to Japanese Patent Application Laid-Open (KOKAI) Nos. 2000-239624 and 2000-119411). The release agents containing a low-density polyethylene-based resin as a main component require a large peeling force, and tend to cause such a problem that when used as a protective film for a pressure-sensitive adhesive layer, a part of the adhesive layer is transferred to the surface of the release layer upon peeling, or the surface of the adhesive layer after peeling is undesirably peeled and suffers from a pulse-like shape called "stick slip". Whereas, the release agents containing a high-density polyethylene-based resin as a main component tend to have problems such as deteriorated adhesion strength to a substrate composed of a polar polymer and a large peeling force.

### DISCLOSURE OF THE INVENTION

The present invention has been conducted in view of the above conventional problems. An object of the present invention is to provide a release agent and a release sheet which contain no silicone-based components generating undesired gases, can exhibit not only a good releasability to various adhesives but also a less fluctuation in peeling force, and can maintain a low peeling force even when the release agent or sheet is bonded to an adhesive and preserved under a heating condition.

As a result of the present inventors' earnest studies for solving the above problems, it has been found that the above object can be readily accomplished by the release agent containing a low-density olefin-based elastomer and a high-density ethylene-α-olefin polymer as main components. The present invention has been attained on the basis of the above finding.

To accomplish the aim, in a first aspect of the present invention, there is provided a release agent comprising (A) an olefin-based elastomer having a density of not less than 0.855 g/cc and less than 0.868 g/cc, and (B) an ethylene-α-olefin copolymer having a density of from 0.868 to 0.970 g/cc as main components, wherein the difference in average density between said components (A) and (B) is not less than 0.005 g/cc, and the mixing weight ratio of the component (A) to the component (B) is from 90:10 to 10:90. In the preferred embodiments of the present invention, the component (A) is a copolymer of ethylene with at least one comonomer selected from the group consisting of propylene, butene and hexene; the component (A) and/or the component (B) have a functional group; and further the component (A) and the component (B) exhibit an endothermic peak of not less than 1 J/g as measured at the temperature of from 0 to 200°C using a differential scanning calorimeter.

In a second aspect of the present invention, there is provided a release sheet comprising a substrate and a release layer formed at least one surface of the substrate, which is composed of the release agent as defined above. In the preferred embodiment of the present invention, the release layer is composed of the release agent obtained by cross-linking the component (A) or (B) with a reactive compound capable of reacting with the functional group contained therein.

### BRIEF DESCRIPTION OF THE DRAWING

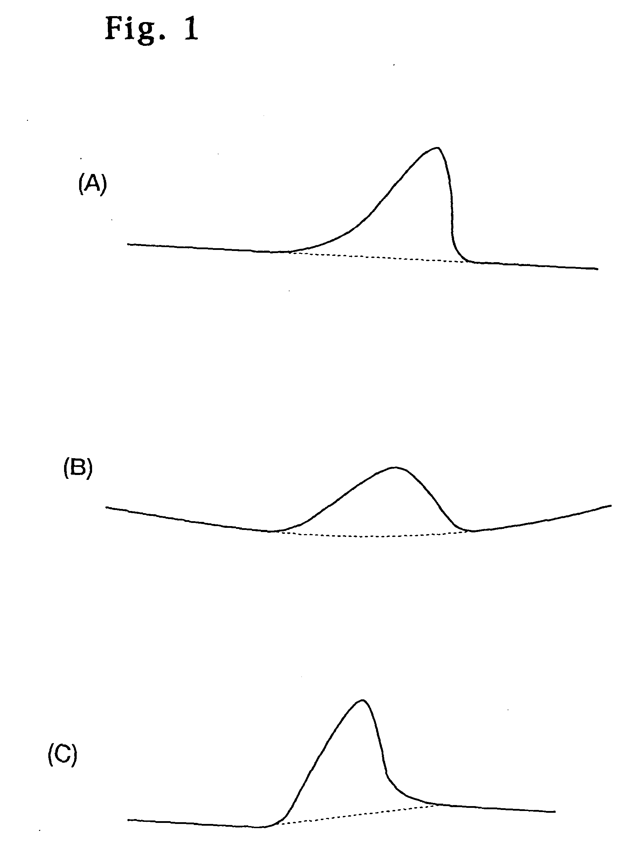

Fig. 1 is an explanatory view showing a method of drawing a base line relative to an endothermic peak obtained by DSC measurement.

### PREFERRED EMBODIMENT FOR CARRYING OUT THE INVENTION

First, the release agent of the present invention is described. The olefin-based elastomer used as the component (A) in the present invention has a density of not less than 0.855 g/cc and less than 0.868 g/cc. When the density of the component (A) is too small, the resultant release agent tends to exhibit a too large peeling force, thereby failing to attain a sufficient releasability. On the other hand, when the density of the component (A) is too large, the resultant release agent tends to exhibit a large peeling force owing to ill balance with the ethylene-α-olefin copolymer, thereby also failing to attain a sufficient releasability.

The ethylene-α-olefin copolymer used as the component (B) in the present invention has a density of from 0.868 g/cc to 0.970 g/cc. When the density of the component (B) is too small, the resultant release agent tends to be insufficient in heat resistance and film strength. On the other hand, when the density of the component (B) is too large, the resultant release agent tends to exhibit a large peeling force owing to ill balance with the component (A), thereby failing to attain a sufficient releasability.

Meanwhile, in general, the density of a polymer depends upon a crystallinity thereof. The crystallized portion of the polymer exhibits a high density. The crystallinity of the polymer can be evaluated by an endothermic peak as measured using a differential scanning calorimeter (DSC) by the following procedure.

That is, the endothermic peak is measured using a measuring apparatus "DSC7" manufactured by Perkin-Elmer Co., Ltd., according to 3(2) "Measurement of Heat of Melting after predetermined Heat Treatment" of JIS K7122-1987 "Method for Measuring Heat of Transition of Plastics". The measuring conditions are shown in Table 1 below.

**Table 1**

| | |
|---|---|
| (1) Measuring temperature range | From -40 to 220°C |
| (2) Melting atmosphere | N₂ gas atmosphere flowing at a rate of 200 mL/min |
| (3) Temperature rise rate | 10°C/min |
| (4) Sample weight | A constant weight selected from 5 to 15 mg (accurately weighed in the order of 0.1 mg) |
| (5) Sampling container | Aluminum container (aluminum pan) |

The measuring apparatus is controlled as follows. That is, two vacant aluminum pans having substantially the same weight are placed on two sample holders, respectively, to conduct measurements under the same conditions as used actually, thereby controlling the measuring apparatus such that the base line becomes a straight line.

The sample is prepared as follows. That is, a raw material of a sample is interposed between Teflon sheets, and molded using a compression-molding machine heated to 200°C to form a 250 µm-thick film. Then, the thus obtained film was then cooled and solidified using a press-molding machine maintained at 25°C, and the Teflon sheets are peeled off from the film. The film is allowed to stand at 25°C for one day and then subjected to DSC measurement. Such a procedure enables production of samples having a constant heat history after the polymerization.

The method of drawing the base line relative to the endothermic peak may be performed as shown in (A) to (C) of Fig. 1 according to a shape of the endothermic peak. Fig. 1 is an explanatory view showing the method of drawing the base line relative to the endothermic peak.

(A) of Fig. 1 shows the case where a starting point and a terminal point of the endothermic peak are present on the same base, so that the base line drawn relative to the endothermic peak is a straight line. In this case, the base line is drawn as a straight line connecting the starting and terminal points with each other, and the peak area is obtained on the basis of the base line, thereby determining an endothermic amount of the polymer.

(B) of Fig. 1 shows the case where a starting point and a terminal point of the endothermic peak are not present on the same base, and a straight line extrapolated in the direction extending from the starting point toward the peak and a straight line extrapolated in the direction extending from the terminal point toward the peak are intersected with each other. In this case, a curved base line is drawn so as to overlap the straight line on the starting point side with that on the terminal point side to a maximum extent, and the peak area is obtained on the basis of the curved base line, thereby determining an endothermic amount of the polymer.

(C) of Fig. 1 shows the case where a starting point and a terminal point of the endothermic peak are not present on the same base, and a straight line extrapolated in the direction extending from the starting point toward the peak and a straight line extrapolated in the direction extending from the terminal point toward the peak are not intersected with each other. In this case, the base line is drawn as a straight line connecting the starting and terminal points with each other, and the peak area is obtained on the basis of the base line, thereby determining an endothermic amount of the polymer. When the starting point of the endothermic peak is present at a temperature of not more than 0°C and the terminal point thereof is present at a temperature of more than 0°C, the endothermic amount for the endothermic peak is represented by an endothermic amount obtained from 0°C to the terminal point (i.e., a region corresponding to a temperature of less than 0°C is omitted).

In the preferred embodiment of the present invention, from the standpoint of heat resistance, there is used a crystalline polymer exhibiting an endothermic peak of not less than 1 J/g as measured at the temperature of from 0 to 200°C by DSC.

The lower limit (about 0.855 g/cc) of the density of the component (A), may be determined in the consideration of the above crystallinity (heat resistance), especially when the component (A) is the copolymer of ethylene with at least one comonomer selected from the group consisting of propylene, butene and hexene. From the standpoint of the crystallinity, the lower limit of the density of the component (A) is preferably about 0.860 g/cc. Meanwhile, the component (B) exhibits a far higher crystallinity than that of the component (A).

The release agent of the present invention containing the components (A) and (B) having the above high crystallinity as main components shows an increased coagulation force due to the existence of an agglomerated phase based on crystallized portions thereof, and is, therefore, excellent in heat resistance as well as scratch resistance. The endothermic peak of the component (A) as measured by DSC is preferably 1 to 50 J/g, more preferably 3 to 30 J/g. When the endothermic peak of the component (A) is more than 30 J/g, the crystallinity of the component (A) tends to be too high, resulting in production of a hard release agent. On the other hand, the endothermic peak of the component (B) as measured by DSC is preferably 30 to 250 J/g, more preferably 35 to 200 J/g. When the endothermic peak of the component (B) is less than 30 J/g, the resultant release agent tends to become thermally unstable. When the endothermic peak of the component (B) is more than 250 J/g, since the difference in crystallinity between the components (A) and (B) is too large, the component (B) tends to be more earlier crystallized during the melting step and the crystallization step, so that the components (A) and (B) tend to be separated from each other, thereby failing to obtain a release agent having an excellent heat resistance.

The olefin-based elastomer as the component (A) has a small peeling force and, therefore, is excellent in releasability, but tends to be deteriorated in heat resistance and film strength. On the other hand, the ethylene-α-olefin copolymer as the component (B) has a large peeling force and, therefore, tends to be deteriorated in releasability, but is excellent in heat resistance and film strength. In order to allow the release agent to exhibit both the excellent releasability of the component (A) and the excellent heat resistance of the component (B), the difference (Δρ) in average density between the components (A) and (B) is controlled to not less than 0.005 g/cc, preferably not less than 0.01 g/cc. When the difference in average density between the components (A) and (B) is too small, the release agent containing the components (A) and (B) as main components may fail to maintain a good balance between releasability and heat resistance.

Also, in the present invention, the blending ratio (weight ratio) of the component (A) to the component (B) is required to be 90:10 to 10:90. That is, as described above, the release agent of the present invention is well balanced between heat resistance and releasability by enhancing its heat resistance due to the use of the component having a high crystallinity, and controlling the ratio in density between the components (A) and (B) within an appropriate range. In addition, by limiting the blending ratio between the components (A) and (B) within the above-specified range, the balance between heat resistance and releasability of the release agent is more suitably improved. That is, when the percentage of the component (A) blended is more than 90% by weight, since the content of the low-melting component, i.e., the component (A), is too large, the resultant release agent tends to be deteriorated in heat resistance. On the other hand, when the percentage of the component (B) blended is more than 90% by weight, since the content of the high-density component, i.e., the component (B), is too large, the resultant release agent tends to become too hard, thereby causing problems concerning coagulation force thereof. The blending ratio (weight ratio) of the component (A) to the component (B) is preferably from 80:20 to 40:60.

The peeling force of the olefin-based elastomer may be controlled by not only the above method in which the blending ratio between the components (A) and (B) is controlled, but also various other methods. Examples of the other methods for controlling the peeling force may include a method (1) of controlling the stereoregularity of each of the olefin-based elastomer and the ethylene-α-olefin copolymer to an appropriate value to suitably adjust the crystallinity and glass transition temperature thereof, a method (2) of controlling the crystallinity and glass transition temperature of these components by copolymerization thereof, or the like.

When the glass transition temperature or elastic modulus of the release agent is excessively raised, although the release layer is improved in film strength, the peeling force thereof is increased, resulting in deterioration in flexibility (fabricatability) of the release layer. On the other hand, when the glass transition temperature or elastic modulus of the release agent is excessively lowered, the peeling force thereof tends to be lessened. As a result, although the releasability of the release layer is enhanced due to decrease in peeling force thereof, the release layer tends to be deteriorated in film strength.

As the olefin-based elastomer, there may be used homopolymers of olefins as well as polymers obtained by copolymerizing olefin as a main component with other reactive monomers. Specific examples of the olefin-based elastomer may include homopolymers and copolymers of α-olefins such as ethylene, propylene, butene, hexene, octene or the like as well as copolymers of ethylidene norbornene, norbornene, etc., with α-olefin such as ethylene, etc.

Further, as the olefin-based elastomer, there may also be used diene rubbers obtained by living polymerization, such as polyisoprene or hydrogenated products thereof, and hydrocarbon-based elastomers such as elastomers obtained by ring-opening polymerization of cyclic olefins. Examples of the olefin-based polymers obtained by ring-opening polymerization of cyclic olefins may include ring-opened polymers of alicyclic olefins such as cyclopentene, cyclooctene, norbornene or the like. Further, there may also be used hydrogenated polyolefins such as nucleus-hydrogenated products of styrene-diene copolymers and nucleus-hydrogenated products of styrene-isoprene copolymers. In addition, there may be used compositions composed of a plurality of olefin-based elastomers.

In the present invention, the olefin-based elastomers obtained by the polymerization using metallocene catalysts and vanadium catalysts are preferably used. When the polymerization is conducted in the presence of the metallocene catalysts, the obtained olefin-based elastomers can exhibit a narrow molecular weight distribution and a less content of low-molecular weight components. Further, the use of the above catalysts allows uniform copolymerization, so that production of low-molecular weight components having a comonomer content which is considerably different from that of an average composition of the copolymer, can be effectively prevented. As a result, the resultant release layer is not only inhibited from exhibiting a stickiness, but also enables efficient gelation upon the crosslinking reaction for imparting a chemical resistance thereto, resulting in formation of a release layer having a high chemical resistance.

On the other hand, the ethylene-α-olefin copolymer is not particularly limited as long as the copolymer has a larger density than that of the olefin-based elastomer and contains an ethylene-α-olefin copolymer as a main component. As the ethylene-α-olefin copolymer, there may be used copolymers containing ethylene units and α-olefin units in a molecular structure thereof, and more preferred ethylene-α-olefin copolymers are copolymers or multi-component copolymers of ethylene with at least one α-olefin selected from the group consisting of propylene, butene and hexene. In addition, copolymers of ethylidene norbornene, norbornene, etc., with α-olefin such as ethylene, etc., may also be used unless the use of such copolymers adversely affects a releasability of the release layer. The ethylene content in the ethylene-α-olefin copolymer is usually not less than 30 mol%, preferably from 50 to 95 mol%.

In the present invention, the ethylene-α-olefin copolymer may be polymers produced in the presence of any of metallocene catalysts, Ziegler-Natta catalysts and vanadium catalysts. Of these ethylene-α-olefin copolymers, preferred are multi-component ethylene copolymers produced in the presence of the metallocene catalysts. When the polymerization is conducted in the presence of the metallocene catalysts, the obtained ethylene-α-olefin copolymers can exhibit a narrow molecular weight distribution and a less content of low-molecular weight components. Further, since the use of the metallocene catalysts allows uniform copolymerization, so that production of low-molecular weight components having a comonomer content which is considerably different from that of an average composition of the copolymer, can be effectively prevented. As a result, the resultant release layer is not only inhibited from exhibiting a stickiness, but also enables efficient gelation upon the crosslinking reaction for imparting a chemical resistance to the coating film, resulting in formation of a release layer having a high heat resistance and a high film strength.

The methods for producing the olefin-based elastomer and the ethylene-α-olefin copolymer are not particularly limited, and there may be used a solution polymerization method, a gas-phase polymerization method, a slurry polymerization method, a high-pressure polymerization method, a bulk polymerization method, etc. As the polymerization method, there may be used a method of feeding monomers previously sealed in a polymerization system irrespective of gaseous or liquid monomers, at a constant velocity during the polymerization, or a method of feeding the monomers such that the polymerization system is kept under a constant pressure.

Specific examples of the metallocene catalysts may include rac-isopropylidene bis(1-indenyl)zirconium dichloride, rac-dimethylsilyl bis-1-(2-methylindenyl) zirconium dichloride, rac-dimethylsilyl bis-1-(2-methyl-4-phenylindenyl)zirconium dichloride, rac-dimethylsilyl bis-1-(2-methyl-4,5-benzoindenyl) zirconium dichloride, isopropylidene-9-fluorenylcyclopentadienyl zirconium dichloride, etc.

Specific examples of the Ziegler-Natta catalysts may include titanium trichloride-based catalysts and magnesium chloride-carried type titanium tetrachloride catalysts which have been presently frequently used in industrial applications. Specific examples of the vanadium catalysts may include catalysts containing oxyvanadium and an alkoxy group such as (monoethoxy)oxyvanadium dichloride and (diethoxy)oxyvanadium chloride, etc. Examples of the cocatalyst components used in combination with these catalysts may include trialkyl aluminums such as trimethyl aluminum, triethyl aluminum and triisobutyl aluminum, dialkyl monohaloaluminums such as diethyl aluminum chloride, monoalkyl dihaloaluminums such as ethyl aluminum dichloride, sesquialuminum compounds such as ethyl aluminum sesquihalide, etc.

In the present invention, a blended mixture composed of the olefin-based elastomer as the component (A) and the ethylene-α-olefin copolymer as the component (B) may be directly used as the release agent. Further, when a functional group is added to one or both of the components (A) and (B), the resultant release agent can exhibit an excellent adhesion property to a substrate. Furthermore, when the release agent component is partially crosslinked, the obtained release agent not only can be sufficiently prevented from being transferred to an adhesive surface, but also is excellent in adhesion property to the substrate as well as heat resistance, chemical resistance and film strength.

The modified olefin-based elastomer having a functional group has such a structure that a suitable functional group is introduced into the above olefin-based elastomers. The modified olefin-based elastomers may be used singly or in the form of a mixture with other olefin-based elastomers. Examples of the functional group introduced into the olefin-based elastomers may include reactive functional groups such as epoxy group, succinic anhydride group, carboxyl group, hydroxyl group, amine group, isocyanate group and hydroxyphenyl group, as well as unsaturated bond-containing groups such as vinyl group, isopropenyl group, (meth)acrylate groups and allyl group. The modified olefin-based elastomer may be produced by adding a reactive monomer having the above functional group to the olefin-based elastomer.

On the other hand, the modified ethylene-α-olefin copolymer having a functional group has such a structure that a suitable functional group is introduced into the above ethylene-α-olefin copolymers. The modified ethylene-α-olefin copolymers may be used singly or in the form of a mixture with ethylene-α-olefin copolymers or modified ethylene-α-olefin copolymers having different functional groups. Examples of the functional group introduced into the ethylene-α-olefin copolymers may include the same functional groups as used for the modified olefin-based elastomers. The modified ethylene-α-olefin copolymer may be produced by adding a reactive monomer having the above functional group to the ethylene-α-olefin copolymers in the presence of a peroxide.

Upon crosslinking of the functional group, the maximum content of the functional group in the composition is usually 5% by weight, preferably 1% by weight. When the maximum content of the functional group is more than 5% by weight, the releasability inherent to the olefin-based elastomer and the ethylene-α-olefin copolymer tends to be deteriorated. The minimum content of the functional group in the composition is usually 0.001% by weight, preferably 0.01% by weight.

The release agent of the present invention may contain a crosslinking agent. In the present invention, there are preferably used crosslinking agents having functional groups or organic peroxides.

Examples of the crosslinking agents having functional groups may include compounds containing at least two functional groups capable of reacting with the modified olefin-based elastomers and/or ethylene-α-olefin copolymers having the functional group, in a molecule thereof. Such compounds may be low-molecular compounds or the modified olefin-based elastomers and/or modified ethylene-α-olefin copolymers containing crosslinkable functional groups. The amount of the crosslinking agent added is controlled such that the molar ratio of the functional group contained in the elastomer to the functional groups contained in the crosslinking agent which is reactive with the functional group of the elastomer (elastomer/crosslinking agent) is in the range of usually 0.1 to 10, preferably 0.5 to 2. When the molar ratio between the functional groups is out of the above-specified range, the amount of residual unreacted functional groups tends to be increased, resulting in increased peeling force of the obtained release agent.

As the organic peroxides, there may be used ordinary peroxides such as ketone peroxides, hydroperoxides and diacyl peroxides. Upon the crosslinking reaction using the peroxides, there are preferably used olefin-based elastomers containing reactive double bonds or ethylene. The amount of the peroxide added is in the range of usually 0.01 to 3 parts by weight, preferably 0.1 to 1 part by weight based on 100 parts by weight of the release agent composition.

In the present invention, any additives may be added to the release agent unless the addition of the additives adversely affect properties of the release agent. Examples of the additives may include peeling assistants such as typically paraffin waxes, plasticizers such as process oils, anti-blocking agents, antioxidants, ultraviolet absorbers, antistatic agents, lubricants, dispersants, nucleating agents, colorants, anticorrosion agents, etc. These additives may be appropriately added to the release agent according to the aimed applications. Further, for the purpose of improving the adhesion property to the substrate or enhance the crosslinking efficiency, copolymers of α-olefin with functional group-containing compounds may be added to the release agent, if desired.

The release agent of the present invention may be dissolved in a solvent, applied to the surface of the substrate and then dried to form a release layer thereon. Alternatively, the release agent may be formed into a release sheet by a method of laminating the release agent kept in a molten state on the substrate, a method of coextruding the release agent together with a material of the substrate, etc.

Next, the release sheet of the present invention is described. The release sheet of the present invention includes a substrate and a release layer formed on at least one surface of the substrate, which is composed of the above release agent.

The substrate is not particularly limited as long as it has a function of supporting the release layer thereon. Examples of the substrate may include plastic films composed of polyesters such as polyethylene terephthalate and polybutylene terephthalate, polyolefins such as polypropylene and polymethyl pentene, and polycarbonates, metal foils such as aluminum foil and stainless steel foil, papers such as glassine papers, woodfree papers, coated papers, impregnated papers and synthetic papers, nonwoven fabrics, etc.

Of these substrates, preferred are plastic films. Also, there may be suitably used so-called dust-free papers which are lessened in amount of dusts generated therefrom (for example, refer to Japanese Patent Publication (KOKOKU) No. 6-11959(1994)). When the substrate is constituted of the plastic films or the dust-free papers, generation of dusts, etc., can be prevented upon processing or use thereof, so that adverse influence on electronic equipments such as hard disc devices can be avoided. The plastic films or the dust-free papers used as the substrate can be readily cut or punched upon processing thereof. In the case where the plastic film is used as the substrate, the material thereof is preferably polyethylene terephthalate. Such a polyethylene terephthalate film is advantageous since the amount of dusts generated therefrom is lessened, and the amount of gases generated upon heating is also lessened.

The thickness of the substrate is not particularly limited, and usually from 10 to 200 µm, preferably 25 to 50 µm. The substrate used in the present invention may be subjected to corona treatment, plasma treatment, flame plasma treatment, etc. In addition, the substrate may be of a multilayer structure in which a primer layer, an anchor coat layer, etc., is provided in order to attain a good adhesion to the release layer.

The thickness of the release layer which is formed by applying a release agent solution on the substrate usually from 0.01 to 5 µm, preferably 0.1 to 5 µm. When the thickness of the release layer is less than 0.1 µm, a peeling force of the release layer may tend to be increased owing to influence of the substrate. When the thickness of the release layer is more than 5 µm, the coating film tends to be readily peeled off. Also, the thickness of the release layer formed by applying a melted release agent on the substrate is usually from 0.1 to 100 µm, preferably 0.1 to 50 µm. However, the release layer having a thickness of less than 0.1 µm generally tends to suffer from inconveniences such as uneven film thickness depending upon molding machines used. To avoid these inconveniences, in the present invention, the release layer laminated on the substrate may be monoaxially or multi-axially stretched, or rolled during or after the lamination process to form the release layer into a thin film. The above method enables formation of a release layer having even a thickness of less than 0.1 µm.

The release sheet of the present invention may be used in various applications by bonding to an adhesive surface. In particular, the release sheet of the present invention is more preferably applied to processes for production of semiconductors or ceramic green sheets, adhesive tapes, surface protective films, laminated containers, etc.

The kinds of adhesive surfaces to which the release sheet of the present invention is applicable, are not particularly limited. Examples of the adhesive surfaces against which the release agent of the present invention can exhibit good releasability, may include surfaces composed of the following adhesives. Examples of the adhesives may include various ordinarily known adhesives such as rubber-based adhesives, acryl-based adhesives, urethane-based adhesives, silicone-based adhesives vinyl-based adhesives or the like. These adhesives may be any of one-pack type or two-pack type, or an emulsion type (for example, refer to "Dictionary of Bonding and Adhesion", edited by Shozaburo YAMAGUCHI and published by Asakura Shoten, pp. 118 to 169, 1993).

Adhesive tapes for electronic equipments are required to have a low out-gas property and a reliable bonding property. Therefore, in the adhesive tapes, there are preferably used acryl-based adhesives.

The acryl-based adhesives may be prepared by using an acryl-based polymer obtained by an ordinary polymerization method such as a solution polymerization method, an emulsion polymerization method and an ultraviolet radiation polymerization method as a main component, and adding thereto, if required, various additives such as crosslinking agents, tackifiers, softening agents, anti-aging agents and fillers.

Examples of the acryl-based adhesives may include copolymers of a mixture of monomers containing, as a main component, alkyl (meth)acrylate (preferably alkyl (meth) acrylate whose alkyl group has about 2 to 12 carbon atoms, and more preferably alkyl (meth) acrylate whose alkyl group has about 4 to 10 carbon atoms) such as ethyl (meth)acrylate, butyl (meth)acrylate, isoamyl (meth)acrylate, n-hexyl (meth)acrylate, 2-ethylhexyl (meth)acrylate, isooctyl (meth)acrylate, isononyl (meth)acrylate, decyl (meth)acrylate and dodecyl (meth)acrylate, and further, if required, a modifying monomer copolymerizable with the alkyl (meth)acrylate, for example, hydroxyl-containing monomers such as hydroxyalkyl (meth)acrylate, cyano-containing monomers such as acrylonitrile, amide-containing monomers such as acrylamide and substituted acrylamides, vinyl esters such as vinyl acetate and aromatic vinyl compounds such as styrene.

For example, the release sheet of the present invention may be used as a release film for an adhesive sheet such as a surface protective adhesive sheet used upon processing a silicon wafer used in semiconductor integrated circuits (IC), or a dicing adhesive sheet. In addition, the release sheet of the present invention may also be used as a release film for resin-sealed semiconductors. More specifically, the release sheet of the present invention may be interposed between a sealed surface of a semiconductor chip and a metal die.

Upon production of ceramic green sheets, the release layer of the release sheet of the present invention may be coated with a ceramic slurry. On the green sheet thus produced on the release sheet of the present invention, electrodes composed of palladium, silver, nickel or the like may be formed by screen-printing method, etc. Further, the thus processed ceramic green sheet may be further subjected to a repeated procedure of coating the green sheet with a ceramic slurry and forming the electrodes thereon, thereby enabling formation of a green sheet having a multilayer structure. After completion of these steps, the release sheet is separated from the green sheet, and then the green sheet may be appropriately laminated, cut into chips, baked and machined, thereby obtaining ceramic electronic parts such as capacitors, laminated inductor devices, piezoelectric parts, thermistors and varistors.

The release sheet of the present invention may be used as a board for adhesive sheets or adhesive tapes, or a surface protective film for protecting, for example, decorative steel plates for electric home appliances or building materials, and a painted surface of automobiles to prevent these parts or portions from suffering from injures or contamination.

A laminated sheet provided on at least one surface thereof with the release sheet of the present invention may be molded to form a container which is facilitated in operations for attaching various pressure-sensitive adhesive labels thereonto and peeling off these labels therefrom. Such a laminated container may be suitably produced by a melting or semi-melting lamination method including a sheet-thermoforming method, a blow-molding method, and a multilayer injection molding method such as a two-color molding method and a sandwich lamination method.

Further, as an alternative method for producing the laminated container of the present invention, there may be used a method of separately producing a film or sheet having a surface layer composed of the release agent of the present invention, and then subjecting the thus obtained film or sheet to heat lamination, i.e., inserting the film or sheet into a metal die upon molding to heat-melt the film or sheet on the surface of the container. For example, in the case where the thermoformed container is produced by the sheet-forming method, there may be used a method of melt-extruding a sheet containing a surface layer and an inside layer contacted with the surface layer from a die. As the method for laminating the respective layers, there may be used any method as long as molten resin materials for forming respective layers are suitably laminated with each other before extruding the materials from a die. In general, there may be used a multi-manifold method in which respective materials are melt-kneaded in an extruder and then laminated within a die, or a feed block method (a combining adapter method) in which respective resin materials are laminated on each other before flowing into the die. The shape of the obtained container may include various cup shapes, a tray shape, a dish shape, a bowl shape, or the like.

Here, the thermoforming method means such a molding method in which a sheet, etc., is heated and softened, and then formed into a shape of a metal mold. More specifically, the thermoforming step may be performed by a method using vacuum or air pressure, if required, in combination with a plug to form a sheet into the shape of metal mold (such as a straight method, a drape method, an air-slip method, a snap-back method, a plug-assist method, etc.), a press molding method, or the like. The thermoforming conditions such as temperature, vacuum degree, air pressure and molding velocity may be appropriately determined according to shapes of the plug and metal mold, or properties of the raw sheet material.

The container obtained by the thermoforming method has an extremely less adverse influence on odor or taste of various dairy products prescribed as objective products in "Ordinance relating to standards for components of milk and dairy products, etc." (Ordinance for milk, etc.) as well as contents of a container for milk beverages or various foods, and is excellent in rigidity, heat resistance and impact properties.

Also, in the blow-molding method, there is obtained a container using the above polymer in at least a surface layer thereof. The blow-molding may be performed by known methods such as a direct blow method, an injection blow method, a hot stretch blow method and a cold stretch blow method. In the direct blow method, the container is obtained by a multilayer blow-molding method in which materials for respective layers are simultaneously extruded from a plurality of extruders to inject a multilayer parison through a multilayer die, and the parison is then placed in a closed mold and formed into a desired shape. On the other hand, in the injection blow method, hot stretch blow method and cold stretch blow method, the container is obtained by heating a multilayer preform and forming the preform into a desired shape.

Specific examples of the container may include milk containers, fermented milk containers, fermented lactic-drink containers, containers for milk beverages and containers for similar products. Examples of the beverage containers may include mineral water containers, tea containers, juice containers, and coke containers. Examples of food containers may include salad oil containers, ketchup containers, mayonnaise containers, lemon juice containers, sauce containers and soy sauce containers.

### EXAMPLES:

The present invention is described in more detail by Examples, but the Examples are only illustrative and not intended to limit the scope of the present invention.

### Production Example 1:

A 1000 L SUS pressure polymerization vessel purged with nitrogen was charged with 700 L of n-hexane purified by deaeration and dehydration, and then a dried mixed gas containing an ethylene gas, a propylene gas and a hydrogen gas at a volume ratio of 6:4:1 was fed thereinto and dissolved under stirring at room temperature for 60 min. Next, 5 mol of ethyl aluminum sesquichloride (Al₂Et₃Cl₃) and 0.5 mol of VOCl₃ were charged into the resultant solution, and the contents of the polymerization vessel were reacted with each other at 35°C for one hour while maintaining an inside pressure at 0.5 MPa with the above mixed gas. Thereafter, the catalyst was deactivated with isopropyl alcohol to stop the polymerization.

The thus obtained copolymer solution was subjected to distillation under reduced pressure to remove 400 L of the solvent therefrom and obtain a concentrated solution. The resultant concentrated solution was transferred into a kneader, and then heated and distilled under reduced pressure therein to remove the solvent therefrom. The resultant kneaded material was then introduced into an extruder and extruded therefrom, thereby obtaining 36 kg of a copolymer (hereinafter occasionally referred to as "olefin-based elastomer (1)") in the form of pellets. As a result of the H-NMR analysis, it was confirmed that a molar ratio of ethylene to propylene in the obtained product was 80:20. Also, as a result of the GPC measurement, it was confirmed that the obtained product had a weight-average molecular weight of 131,000 and a molecular weight distribution of 2.5. Further, it was confirmed that the obtained product had a density of 0.860 g/cc. Meanwhile, the density of the obtained product was the value measured using a density gradient tube with a water-ethanol liquid system according to the method D of JIS K7112 (this definition of the density is similarly applied to the subsequent descriptions). In addition, it was confirmed that the melting heat of the obtained product was 8 J/g as measured at the temperature of from 0 to 200°C by DSC. Meanwhile, the DSC measurement was performed by the method described in the present specification (which is similar in the subsequent descriptions).

### Production Example 2:

The same procedure as defined in Production Example 1 was conducted except that the volume ratio between the ethylene, propylene and hydrogen gases was changed to 6:4:2, thereby obtaining 39 kg of an ethylene-propylene copolymer (hereinafter occasionally referred to as "olefin-based elastomer (2)"). As a result of the H-NMR analysis, it was confirmed that a molar ratio of ethylene to propylene in the obtained product was 81:19. Also, as a result of the GPC measurement, it was confirmed that the obtained product had a weight-average molecular weight of 100,500 and a molecular weight distribution of 2.5. Further, it was confirmed that the obtained product had a density of 0.860 g/cc. In addition, it was confirmed that the melting heat of the obtained product was 11 J/g as measured at the temperature of from 0 to 200°C by DSC.

### Production Example 3:

A 1000 L SUS pressure polymerization vessel was purged with a mixed gas containing ethylene and propylene at a partial pressure ratio of 85:15, and then charged with 750 L of deaerated and dried toluene. Then, a toluene solution of methyl alumoxane containing 100 mol of A1, which was produced by Witco Co., Ltd., was charged into the reaction system, and the resultant mixture was stirred at 70°C for 30 min. Thereafter, 0.1 mol of a metallocene catalyst (dimethylsilylenebiscyclopentadienyl zirconium dichloride) was added into the polymerization vessel, and the contents of the polymerization vessel were polymerized for 2 hours while pressurizing an inside of the polymerization vessel to 0.7 MPa with the mixed gas of ethylene and propylene. Thereafter, the polymerization was stopped by adding isopropyl alcohol.

The thus obtained copolymer solution was subjected to distillation under reduced pressure to remove 400 L of the solvent therefrom and obtain a concentrated solution. The resultant concentrated solution was transferred into a kneader, and then heated and distilled under reduced pressure therein to remove the solvent therefrom. The resultant kneaded material was then introduced into an extruder and extruded therefrom, thereby obtaining 33 kg of an ethylene-propylene random copolymer (hereinafter occasionally referred to as "olefin-based elastomer (3)") in the form of pellets. As a result of the H-NMR analysis, it was confirmed that a molar ratio of ethylene to propylene in the obtained product was 89:11. Also, as a result of the GPC measurement, it was confirmed that the obtained product had a weight-average molecular weight of 101,000 and a molecular weight distribution of 2.3. Further, it was confirmed that the obtained product had a density of 0.867 g/cc. In addition, it was confirmed that the melting heat of the obtained product was 20 J/g as measured at the temperature of from 0 to 200°C by DSC.

### Production Example 4:

A 1000 L SUS pressure polymerization vessel was purged with a mixed gas containing ethylene and 1-butene at a partial pressure ratio of 65:35, and then charged with 650 L of deaerated and dried toluene. Then, a toluene solution of methyl alumoxane containing 100 mol of Al, which was produced by Witco Co., Ltd., was charged into the reaction system, and the resultant mixture was stirred at 70°C for 30 min. Thereafter, 0.1 mol of a metallocene catalyst (dimethylsilylenebis(1-indenyl)zirconium dichloride) was added into the polymerization vessel, and the contents of the polymerization vessel were polymerized for 2 hours while pressurizing and maintaining an inside of the polymerization vessel at 0.8 MPa with the mixed gas of ethylene and 1-butene. Thereafter, the polymerization was stopped by adding isopropyl alcohol.

The thus obtained copolymer solution was subjected to distillation under reduced pressure to remove 400 L of the solvent therefrom and obtain a concentrated solution. The resultant concentrated solution was transferred into a kneader, and then heated and distilled under reduced pressure therein to remove the solvent therefrom. The resultant kneaded material was then introduced into an extruder and extruded therefrom, thereby obtaining 36 kg of an ethylene-butene random copolymer (hereinafter occasionally referred to as "olefin-based elastomer (4)") in the form of pellets. As a result of the H-NMR analysis, it was confirmed that a molar ratio of ethylene to butene in the obtained product was 80:20. Also, as a result of the GPC measurement, it was confirmed that the obtained product had a weight-average molecular weight of 78,900 and a molecular weight distribution of 2.4. Further, it was confirmed that the obtained product had a density of 0.861 g/cc. In addition, it was confirmed that the melting heat of the obtained product was 12 J/g as measured at the temperature of from 0 to 200°C by DSC.

### Production Example 5:

A 1 L autoclave was purged with a mixed gas containing ethylene and propylene at a partial pressure ratio of 25:75, and then charged with 450 mL of deaerated and dried toluene. Then, a toluene solution of methyl alumoxane containing 100 mmol of Al, which was produced by Witco Co., Ltd., was charged into the reaction system, and the resultant mixture was stirred at 75°C for 10 min. Thereafter, 0.1 mmol of a metallocene catalyst (dimethylsilylenebis(1-indenyl) zirconium dichloride) was added into the polymerization vessel, and the contents of the polymerization vessel were polymerized for 2 hours while pressurizing and maintaining an inside of the polymerization vessel at 0.95 MPa with the mixed gas of ethylene and propylene.

Thereafter, the polymerization was stopped by adding isopropyl alcohol. The resultant product was reprecipitated in methanol, filtered, and then dried under reduced pressure at 70°C, thereby obtaining 24 g of an ethylene-propylene random copolymer (hereinafter occasionally referred to as "olefin-based elastomer (5)"). As a result of the H-NMR analysis, it was confirmed that a molar ratio of ethylene to propylene in the obtained product was 41:59. Also, as a result of the GPC measurement, it was confirmed that the obtained product had a weight-average molecular weight of 212,500 and a molecular weight distribution of 3.3. Further, it was confirmed that the obtained product had a density of 0.863 g/cc. In addition, it was confirmed that the melting heat of the obtained product was 7 J/g as measured at the temperature of from 0 to 200°C by DSC. Meanwhile, upon the measurement of the melting heat, there were observed two endothermic peaks indicating that the obtained polymer was non-uniform, and the above melting heat (7 J/g) was a sum of the values attributed to the two peaks.

### Production Example 6:

40 g of the ethylene-propylene random copolymer produced in Production Example 1, 1.2 g of 2-hydroxyethyl methacrylate (hereinafter referred to merely as "HEMA"), and 0.06 g of 2,5-dimethyl-2,5-di-t-butyl peroxyhexane as a radical initiator were dry-blended with each other, and the resultant blended mixture was kneaded and reacted using a labo-plasto mill kneader manufactured by Toyo Seiki Seisakusho Co., Ltd., at a temperature of 180°C and a rotating speed of 100 rpm for 3 min, thereby obtaining a hydroxy-containing ethylene-propylene random copolymer (hereinafter occasionally referred to as "HEMA-modified olefin-based elastomer (1)"). The thus obtained polymer was press-molded into a film, and subjected to measurement of FT-IR spectrum to conduct a quantitative determination thereof using a calibration curve separately prepared based on characteristic absorption of carbonyl group at 1724 cm⁻¹. As a result, it was confirmed that the obtained polymer had a HEMA content of 0.9% by weight (i.e., a hydroxyl content of 0.12% by weight), a density of 0.861 g/cc and a molecular weight of 150,000. In addition, it was confirmed that the melting heat of the obtained product was 10 J/g as measured at the temperature of from 0 to 200°C by DSC.

### Production Example 7:

A 1 L autoclave was purged with a mixed gas containing ethylene, buten-1 and propylene at a partial pressure ratio of 65:25:10, and then charged with 450 mL of deaerated and dried toluene. Then, a toluene solution of methyl alumoxane containing 100 mmol of Al, which was produced by Witco Co., Ltd., was charged into the reaction system, and the resultant mixture was stirred at 75°C for 10 min. Thereafter, 0.1 mmol of a metallocene catalyst (dimethylsilylenebis(1-indenyl)zirconium dichloride) was added into the polymerization vessel, and the contents of the polymerization vessel were polymerized for 2 hours while pressurizing and maintaining an inside of the polymerization vessel at 0.95 MPa with the mixed gas of ethylene, buten-1 and propylene.

Thereafter, the polymerization was stopped by adding isopropyl alcohol. The resultant product was reprecipitated in methanol, filtered, and then dried under reduced pressure at 70°C, thereby obtaining 24 g of an ethylene-buten-1-propylene random copolymer (hereinafter occasionally referred to as "olefin-based elastomer (6)"). As a result of the H-NMR analysis, it was confirmed that a molar ratio between ethylene, buten-1 and propylene in the obtained product was 64:22:14. Also, as a result of the GPC measurement, it was confirmed that the obtained product had a weight-average molecular weight of 340,000 and a molecular weight distribution of 1.9. Further, it was confirmed that the obtained product had a density of 0.860 g/cc. In addition, it was confirmed that no melting heat peak was observed as measured at the temperature of from 0 to 200°C by DSC.

### Production Example 8:

A 1000 L SUS pressure polymerization vessel was purged with an ethylene gas, and then charged with 650 L of deaerated and dried toluene and 30 kg of deaerated and dried 1-hexene. Then, a toluene solution of methyl alumoxane containing 150 mol of Al, which was produced by Witco Co., Ltd., was charged into the reaction system, and the resultant mixture was stirred at 70°C for 30 min. Thereafter, 0.1 mol of a metallocene catalyst (dimethylsilylenebiscyclopentadienyl zirconium dichloride) was added into the polymerization vessel, and the contents of the polymerization vessel were polymerized for 3 hours while pressurizing an inside of the polymerization vessel at 0.5 MPa with the ethylene gas. Thereafter, the polymerization was stopped by adding isopropyl alcohol.

The thus obtained copolymer solution was subjected to distillation under reduced pressure to remove 450 L of the solvent therefrom and obtain a concentrated solution. The resultant concentrated solution was transferred into a kneader, and then heated and distilled under reduced pressure therein to remove the solvent therefrom. The resultant kneaded material was then introduced into an extruder and extruded therefrom, thereby obtaining 38 kg of an ethylene-hexene random copolymer (hereinafter occasionally referred to as "ethylene-α-olefin copolymer (1)") in the form of pellets. As a result of the H-NMR analysis, it was confirmed that a molar ratio of ethylene to hexene in the obtained product was 90:10. Also, as a result of the GPC measurement, it was confirmed that the obtained product had a weight-average molecular weight of 70,100 and a molecular weight distribution of 2.3. Further, it was confirmed that the obtained product had a density of 0.880 g/cc. In addition, it was confirmed that the melting heat of the obtained product was 40 J/g as measured at the temperature of from 0 to 200°C by DSC.

### Production Example 9:

The same procedure as defined in Production Example 8 was conducted except that the amount of 1-hexene was changed to 25 kg, the reaction temperature was changed to 85°C, the ethylene pressure was changed to 0.85 MPa and the polymerization time was changed to 2.5 hours, thereby obtaining 34 kg of an ethylene-hexene copolymer (hereinafter occasionally referred to as "ethylene-α-olefin copolymer (2)"). As a result of the H-NMR analysis, it was confirmed that a molar ratio of ethylene to hexene in the obtained product was 93:7. Also, as a result of the GPC measurement, it was confirmed that the obtained product had a weight-average molecular weight of 51,300 and a molecular weight distribution of 2.4. Further, it was confirmed that the obtained product had a density of 0.898 g/cc. In addition, it was confirmed that the melting heat of the obtained product was 78 J/g as measured at the temperature of from 0 to 200°C by DSC.

### Production Example 10:

A 1000 L SUS pressure polymerization vessel was purged with a propylene gas, and then charged with 650 L of deaerated and dried toluene. Then, a toluene solution of methyl alumoxane containing 200 mol of Al, which was produced by Witco Co., Ltd., was charged into the reaction system, and the resultant mixture was stirred at 75°C for 45 min. Thereafter, 0.15 mol of a metallocene catalyst (dimethylsilylenebis(1-indenyl)hafnium dichloride) was added into the polymerization vessel, and the contents of the polymerization vessel were polymerized for 2 hours while feeding propylene and ethylene at a constant speed of 1.5 kg/hr and 20 kg/hr, respectively. Thereafter, the polymerization was stopped by adding isopropyl alcohol.

The thus obtained copolymer solution was subjected to distillation under reduced pressure to remove 450 L of the solvent therefrom and obtain a concentrated solution. The resultant concentrated solution was transferred into a kneader, and then heated and distilled under reduced pressure therein to remove the solvent therefrom. The resultant kneaded material was then introduced into an extruder and extruded therefrom, thereby obtaining 39 kg of an ethylene-propylene random copolymer (hereinafter occasionally referred to as "ethylene-α-olefin copolymer (3)") in the form of pellets. As a result of the H-NMR analysis, it was confirmed that a molar ratio of ethylene to propylene in the obtained product was 97:3. Also, as a result of the GPC measurement, it was confirmed that the obtained product had a weight-average molecular weight of 102,500 and a molecular weight distribution of 2.2. Further, it was confirmed that the obtained product had a density of 0.900 g/cc. In addition, it was confirmed that the melting heat of the obtained product was 150 J/g as measured at the temperature of from 0 to 200°C by DSC.

### Production Example 11:

A 1 L autoclave was purged with a propylene gas, and then charged with 450 mL of deaerated and dried toluene. Then, a toluene solution of methyl alumoxane containing 200 mmol of Al, which was produced by Witco Co., Ltd., was charged into the reaction system, and the resultant mixture was stirred at 75°C for 15 min. Thereafter, 0.15 mmol of a metallocene catalyst (dimethylsilylenebis(1-indenyl) zirconium dichloride) was added into the polymerization vessel, and the contents of the polymerization vessel were polymerized for 2 hours while feeding propylene and ethylene at a constant speed of 1 g/hr and 40 g/hr, respectively.

Thereafter, the polymerization was stopped by adding isopropyl alcohol. The resultant product was reprecipitated in methanol, filtered, and then dried under reduced pressure at 70°C, thereby obtaining 24 g of an ethylene-propylene random copolymer (hereinafter occasionally referred to as "olefin-based elastomer (4)"). As a result of the H-NMR analysis, it was confirmed that a molar ratio of ethylene to propylene in the obtained product was 99:1. Also, as a result of the GPC measurement, it was confirmed that the obtained product had a weight-average molecular weight of 70,500 and a molecular weight distribution of 2.2. Further, it was confirmed that the obtained product had a density of 0.910 g/cc. In addition, it was confirmed that the melting heat peak of the obtained product was 165 J/g as measured at the temperature of from 0 to 200°C by DSC.

### Example 1:

The olefin-based elastomer (1) and the ethylene-α-olefin copolymer (1) were weighed at ratios shown in Table 2, and dissolved in toluene under heating, thereby obtaining a toluene solution containing 2% by weight of a release agent. The thus prepared release agent solution was applied onto one surface of a polyethylene terephthalate (PET) film in such an amount as to form a coating film having a thickness of 0.1 µm after drying, and then dried for 3 min in a Safeven dryer heated to 150°C, thereby obtaining a release sheet. Meanwhile, the PET film used was a 38 µm-thick PET film "DIAFOIL T100-38" produced by Mitsubishi Kagaku Polyester Film Co., Ltd.

### Example 2:

Using a multilayer extrusion-molding machine, the T-die co-extrusion was conducted under conditions including a molding temperature of 220°C, a die width of 70 cm, a take-off speed of 21 m/min, a chill roll temperature of 30°C, a release agent injection amount of 1.1 kg/hr and a substrate material injection amount of 25.5 kg/hr, thereby obtaining a multilayer film having a 1 µm-thick release layer and a 25 µm-thick substrate layer.

The composition of the olefin-based elastomer and the ethylene-α-olefin copolymer used in the release layer is shown in Table 2. The predetermined amounts of these compounds were weighed, and an antioxidant "IRGANOX 1010" was added to the composition in an amount of 0.1 part by weight based on 100 parts by weight of the olefin-based elastomer. The resultant mixture was uniformly mixed using a mixer, and then used in the above process. As the substrate material, polypropylene (PP) "NOVATEC FW3E" produced by Nippon Polychem Co., Ltd., (melting point: 140°C) was directly used. The film thicknesses of the respective layers were determined from the results of observing a cross-section of the multilayer film using an optical microscope, and the film thickness thereof.

### Example 3:

The same procedure as defined in Example 1 was conducted except that the olefin-based elastomer (1) and the ethylene-α-olefin copolymer (1) were used to prepare a release agent composition as shown in Table 2, thereby obtaining a release sheet.

### Example 4:

The same procedure as defined in Example 1 was conducted except that the olefin-based elastomer (4) and the ethylene-α-olefin copolymer (1) were used to prepare a release agent composition as shown in Table 2, thereby obtaining a release sheet.

### Example 5:

The same procedure as defined in Example 1 was conducted except that the olefin-based elastomer (3) and the ethylene-α-olefin copolymer (1) were used to prepare a release agent composition as shown in Table 2, and the thickness of the release layer was changed to 0.2 µm, thereby obtaining a release sheet.

### Example 6:

The same procedure as defined in Example 1 was conducted except that the olefin-based elastomer (5) and the ethylene-α-olefin copolymer (1) were used to prepare a release agent composition as shown in Table 3, and the thickness of the release layer was changed to 0.2 µm, thereby obtaining a release sheet.

### Example 7:

The same procedure as defined in Example 1 was conducted except that a mixture of the HEMA-modified olefin-based elastomer (1) and the olefin-based elastomer (2), and the ethylene-α-olefin copolymer (2) were used as the olefin-based elastomer and the ethylene-α-olefin copolymer, respectively, to prepare a release agent composition as shown in Table 3, and the thickness of the release layer was changed to 0.2 µm, thereby obtaining a release sheet.

### Example 8:

A polyfunctional isocyanate compound "NY718A" produced by Mitsubishi Kagaku Co., Ltd., (a butyl acetate solution containing 76% by weight of a triol adduct of an aliphatic diisocyanate (trifunctional isocyanate)) was added to the release agent used in Example 7 such that the amount of the isocyanate group was 1.1 equivalents based on mole of HEMA contained in the modified olefin-based elastomer. The thus obtained release agent solution was applied onto a PET film and then dried by the same method as defined in Example 1, thereby obtaining a release sheet having a 0.2 µm-thick release layer.

### Examples 9:

A low-density polyethylene having a density of 0.920 g/cc and a melt index of 7.0 g/10 min was melt-extruded at 325°C and laminated on a rough surface of a substrate composed of a machine-glazed bleached kraft paper (basis weight: 80 g/m²; produced by Daio Seishi Co., Ltd.), to form a primer layer having a thickness of 30 µm thereon. Further, the same release agent as used in Example 2 was melt-extruded and laminated at 240°C on the surface of the primer layer so as to form a 30 µm-thick release layer, thereby obtaining a release sheet having a layer structure of substrate/primer layer/release layer (refer to Table 3).

### Examples 10:

The release agent obtained by weighing the olefin-based elastomer (2) and the ethylene-α-olefin copolymer (1) in ratios as shown in Table 3, was melt-extruded and laminated at 240°C on the surface of the same primer layer as formed in Example 9 on the kraft paper so as to form a 30 µm-thick release layer, thereby obtaining a release sheet having a layer structure of substrate/primer layer/release layer.

### Comparative Example 1:

The same procedure as defined in Example 1 was conducted except that the olefin-based elastomer (1) was replaced with the olefin-based elastomer (2), the release agent was prepared from only the olefin-based elastomer (2) without using the ethylene-α-olefin copolymer, and the thickness of the release layer was changed to 0.2 µm, thereby obtaining a release sheet (refer to Table 4).

### Comparative Example 2:

The same procedure as defined in Example 1 was conducted except that the release agent was prepared from only an ethylene-octene copolymer "Engage 8150" produced by DuPont Dow Elastomers Inc., as the ethylene-α-olefin copolymer, which had a density of 0.868 g/cc and a melting heat of 27 J/g as measured at the temperature of from 0 to 200°C by DSC without using the olefin-based elastomer, and the thickness of the release layer was changed to 0.2 µm, thereby obtaining a release sheet (refer to Table 4).

### Comparative Example 3:

The same procedure as defined in Example 1 was conducted except that the release agent was prepared from only an ethylene-butene copolymer "A20090M" produced by Mitsui Kagaku Co., Ltd., as the ethylene-α-olefin copolymer, which had a density of 0.890 g/cc and a melting heat of 73 J/g as measured at the temperature of from 0 to 200°C by DSC without using the olefin-based elastomer, and the thickness of the release layer was changed to 0.2 µm, thereby obtaining a release sheet (refer to Table 4).

### Comparative Example 4:

The same procedure as defined in Example 2 was conducted except that the release agent was prepared from only an ethylene-α-olefin copolymer "Engage 8200" produced by DuPont Dow Elastomers Inc., which had a density of 0.870 g/cc and a melting heat of 27 J/g as measured at the temperature of from 0 to 200°C by DSC without using the olefin-based elastomer, and the injection amount of the release agent and the thickness of the release layer were changed to 2.3 kg/hr and 2 µm, respectively, thereby obtaining a release sheet (refer to Table 4).

### Comparative Example 5:

The same procedure as defined in Example 2 was conducted except that the release agent was prepared from the olefin-based elastomer (3) and the ethylene-α-olefin copolymer "Engage 8200" produced by DuPont Dow Elastomers Inc., and the injection amount of the release agent and the thickness of the release layer were changed to 2.2 kg/hr and 2 µm, respectively, thereby obtaining a release sheet (refer to Table 4).

### Comparative Example 6:

The same procedure as defined in Example 2 was conducted except that the release agent was prepared from only the ethylene-α-olefin copolymer (1) without using the olefin-based elastomer, and the injection amount of the release agent and the thickness of the release layer were changed to 2.3 kg/hr and 2 µm, respectively, thereby obtaining a release sheet (refer to Table 4).

### Comparative Example 7:

The same procedure as defined in Example 1 was conducted except that the release agent was prepared from only the olefin-based elastomer (6), and the thickness of the release layer were changed to 0.2 µm, thereby obtaining a release sheet (refer to Table 4).

### Comparative Example 8:

The olefin-based elastomer (2) and the ethylene-α-olefin copolymer (2) were weighed at ratios shown in Table 4, and dissolved in toluene under heating, thereby obtaining a toluene solution containing 2% by weight of a release agent. The thus prepared release agent solution was applied onto one surface of the same PET film as used in Example 1 and then dried by the same method as defined in Example 1, thereby obtaining a release sheet.

### Comparative Example 9:

The olefin-based elastomer (2) and the ethylene-α-olefin copolymer (4) were weighed at ratios shown in Table 4, and dissolved in toluene under heating, thereby obtaining a toluene solution containing 2% by weight of a release agent. The thus prepared release agent solution was applied onto one surface of the same PET film as used in Example 1 and then dried by the same method as defined in Example 1, thereby obtaining a release sheet.

### (1) Peel Test:

The release sheet obtained in each of the above Examples and Comparative Examples was cut into a tape having a width of 30 mm and a length of 150 mm onto which a commercially available 25 mm-width adhesive double-coated tape "NITTO TAPE No. 500" produced by Nitto Denko Co., Ltd., was bonded under pressure by allowing a 2 kg rubber roller to reciprocate thereover in one stroke. Then, the adhesive tape was fixed onto a stainless steel plate (SUS304), and the release layer was separated from the adhesive layer at 23°C, a peel angle of 180° and a velocity of 300 mm/min using a tensile tester to measure a peeling force required. The peeling force was determined as an average value of five specimens. The results are shown in Table 5.

### (2) Peel Test under heating (Measurement of ratio between peel strengths of heat-treated product and product preserved under ordinary temperature):

The release sheet obtained in each of the above Examples and Comparative Examples was cut into a tape having a width of 30 mm and a length of 150 mm onto which a commercially available 25 mm-width adhesive double-coated tape "NITTO TAPE No. 502" produced by Nitto Denko Co., Ltd., was bonded under pressure by allowing a 2 kg rubber roller to reciprocate thereover in one stroke. Among the thus obtained ten specimens, the five specimens were heat-treated for one hour within a Safeven dryer (Satake Safeven dryer) heated and stabilized at 100°C while applying a load of 20 g/cm² thereonto, and cooled to room temperature, whereas the remaining five specimens were preserved at an ordinary temperature (23°C).

Thereafter, the adhesive tape was fixed onto a stainless steel plate (SUS304), and the release layer was separated from the adhesive layer at 23°C and a velocity of 300 mm/min by setting a peel angle at boundary between the release agent and adhesive to 180° using a tensile tester to measure a peeling force required. The peeling force was determined as an average value of five specimens for each of the heat-treated product and the product preserved at an ordinary temperature. Also, the heat resistance of the release sheet was evaluated by the ratio of the peel strength of the heat-treated product to the peel strength of the product preserved under an ordinary temperature. The closer to 1 the ratio between the peel strengths, the more excellent the heat resistance becomes. The results are shown in Table 5.

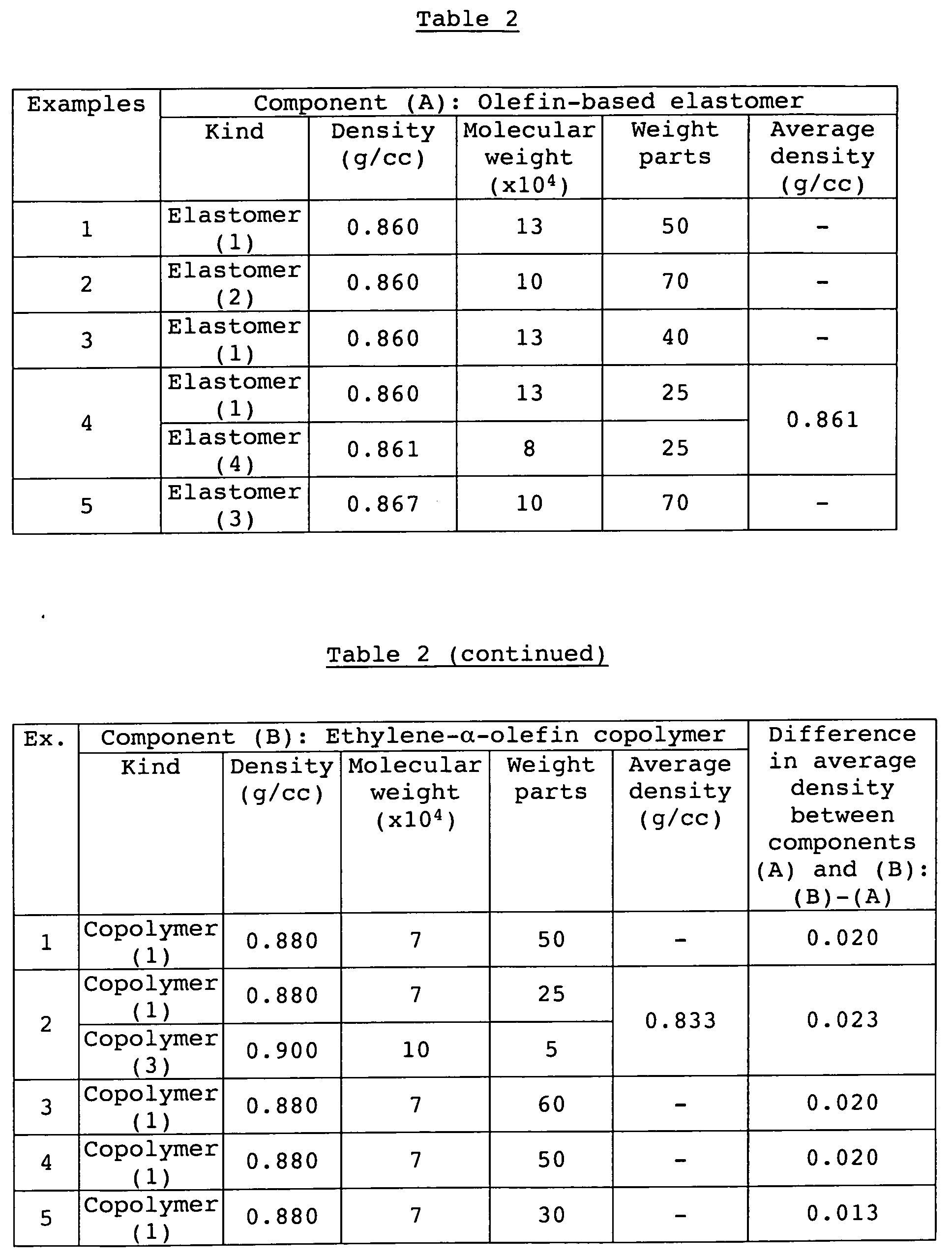

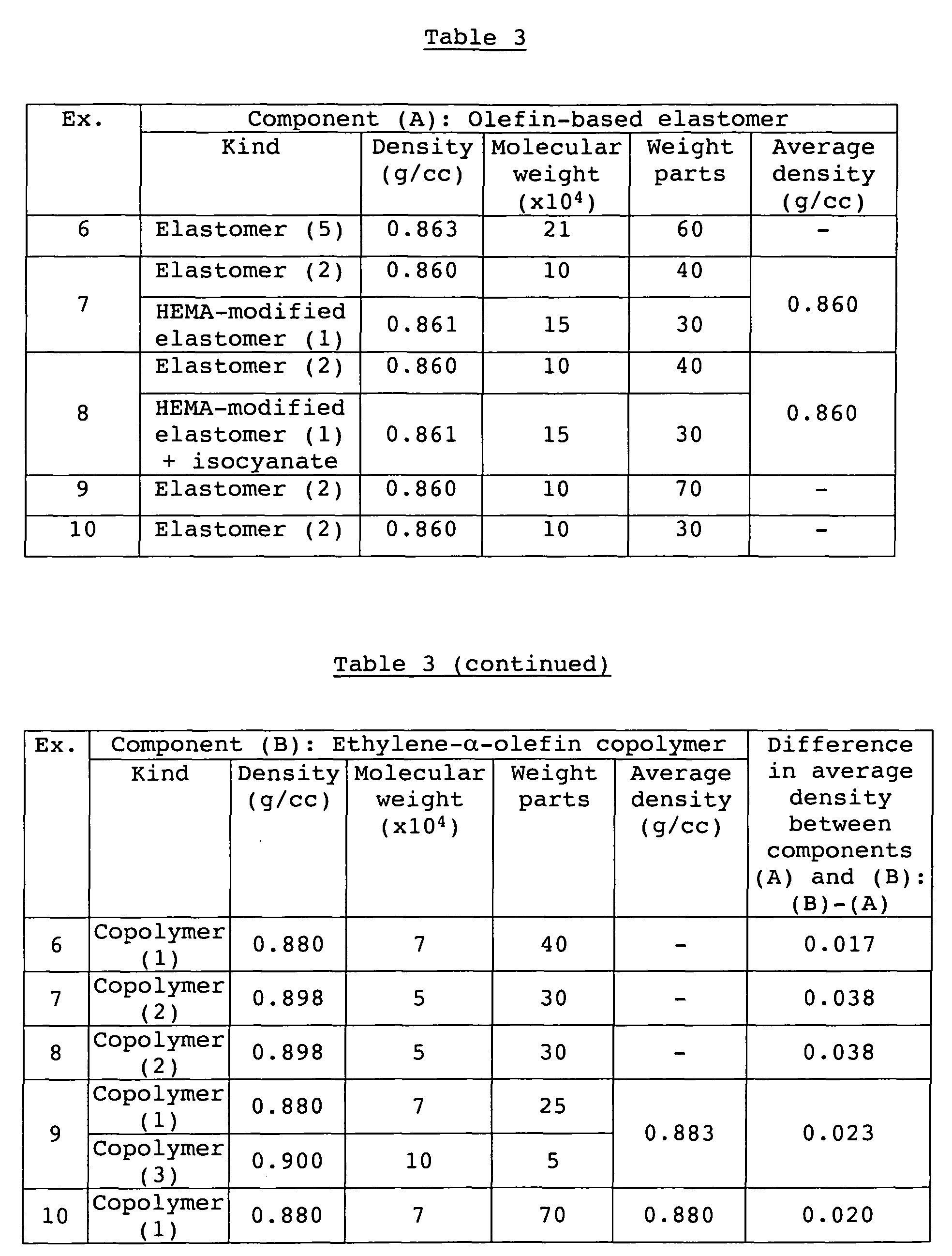

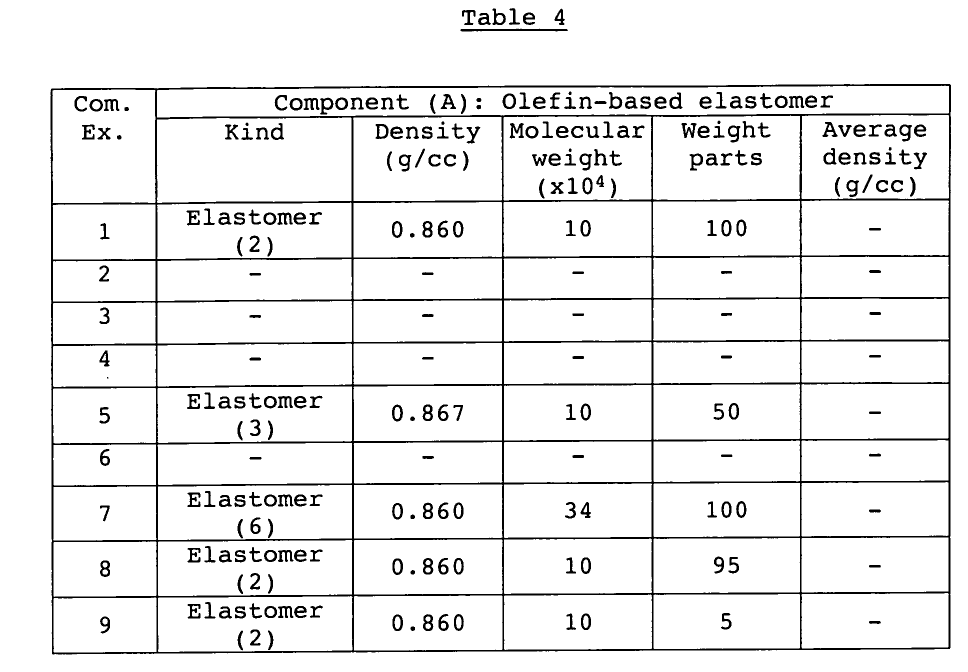

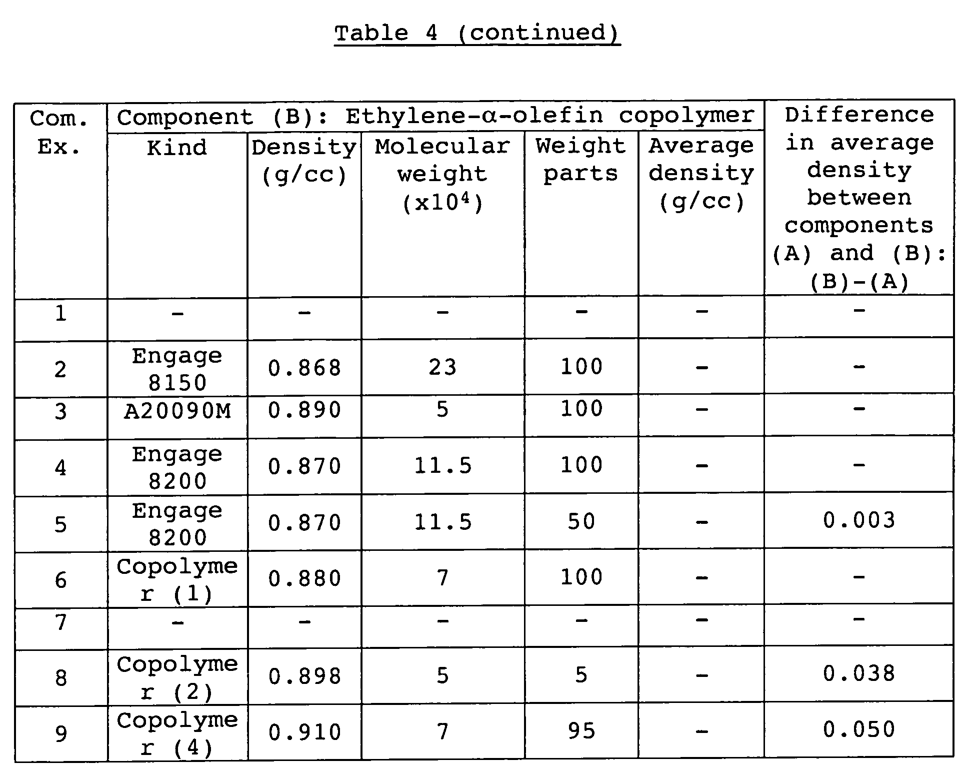

**Table 5**

| Examples/ Comparative Examples | Thickness of release layer (µm) | Substrate (kind) | Peeling force (mN/cm) | Ratio of peel strength of heat-treated product to peel strength of product preserved at ordinary temperature |
|---|---|---|---|---|
| Ex. 1 | 0.1 | PET | 380 | 5 |
| Ex. 2 | 1 | PP | 820 | 3 |
| Ex. 3 | 0.1 | PET | 400 | 5 |
| Ex. 4 | 0.1 | PET | 700 | 4 |
| Ex. 5 | 0.2 | PET | 900 | 3 |
| Ex. 6 | 0.2 | PET | 970 | 1 |
| Ex. 7 | 0.2 | PET | 800 | 3 |
| Ex. 8 | 0.2 | PET | 950 | 3 |
| Ex. 9 | 30 | Paper | 960 | 3 |
| Ex. 10 | 1 | Paper | 800 | 2 |
| Com. Ex. 1 | 0.2 | PET | 260 | 20 |
| Com. Ex. 2 | 0.2 | PET | 3200 | 3 |
| Com. Ex. 3 | 0.2 | PET | 4200 | 1 |
| Com. Ex. 4 | 2 | PP | 2300 | 2 |
| Com. Ex. 5 | 2 | PP | 2000 | 3 |
| Com. Ex. 6 | 2 | PP | 3500 | 2 |
| Com. Ex. 7 | 0.2 | PET | 580 | 17 |
| Com. Ex. 8 | 2 | PET | 300 | 19 |
| Com. Ex. 9 | 2 | PET | 6000 | 1 |

### INDUSTRIAL APPLICABILITY

The release agent of the present invention contains no silicone which tends to cause contamination, have no problems concerning coatability and workability, exhibits a good heat resistance as well as an excellent releasability to an adhesive surface, and, therefore, can satisfy properties inherently required for release agents.

## Claims

1. A release agent comprising (A) an olefin-based elastomer having a density of not less than 0.855 g/cc and less than 0.868 g/cc, and (B) an ethylene-α-olefin copolymer having a density of from 0.868 g/cc to 0.970 g/cc as main components, wherein the difference in average density between said components (A) and (B) is not less than 0.005 g/cc and the mixing weight ratio of the component (A) to the component (B) is from 90:10 to 10:90.

2. A release agent according to claim 1, wherein said component (A) is a copolymer of ethylene with at least one comonomer selected from the group consisting of propylene, butene and hexene.

3. A release agent according to claim 1 or 2, wherein said component (A) and/or said component (B) have a functional group.

4. A release agent according to any one of claims 1 to 3, wherein said component (A) and said component (B) exhibit an endothermic peak of not less than 1 J/g as measured at the temperature of from 0 to 200°C using a differential scanning calorimeter.

5. A release sheet comprising a sheet-like substrate and a release layer formed at least one surface of the substrate, which is composed of the release agent as defined in any one of claims 1 to 4.

6. A release sheet according to claim 5, wherein the release layer is composed of the release agent obtained by cross-linking the component (A) or (B) with a reactive compound capable of reacting with the functional group contained therein.
